# EUROPEAN PATENT SPECIFICATION

(11) **EP 3 450 122 B1**
(45) Date of publication and mention of the grant of the patent: **01.12.2021**
(21) Application number: 17189197.1
(22) Date of filing: 04.09.2017
(51) Int. Cl.: B26D 1/02, B26D 3/00, B26D 7/06, B26D 3/30, H01M 6/06, H01M 6/52, B26D 1/00

(54) **STATION FOR CUTTING AA-TYPE, D-TYPE AND/OR C-TYPE BATTERIES, METHOD FOR SEPARATING AND RECOVERING COMPONENTS OF SAID BATTERIES AND SYSTEM FOR IMPLEMENTING SUCH A METHOD**
STATION ZUM SCHNEIDEN VON AA-TYP-, D-TYP- UND/ODER C-TYP-BATTERIEN, VERFAHREN ZUR TRENNUNG UND RÜCKGEWINNUNG VON BESTANDTEILEN DER BESAGTEN BATTERIEN UND SYSTEM ZUR DURCHFÜHRUNG SOLCH EINES VERFAHRENS
STATION POUR COUPER DES BATTERIES DE TYPE AA, DE TYPE D ET/OU DE TYPE C, PROCÉDÉ DE SÉPARATION ET DE RÉCUPÉRATION DE COMPOSANTS DESDITES BATTERIES ET SYSTÈME PERMETTANT DE METTRE EN OEUVRE UN TEL PROCÉDÉ

(43) Date of publication of application: 06.03.2019
(73) Proprietor: EVH S.R.L. IN LIQUIDAZIONE, 20149 Milano (IT)
(72) Inventor: VOLAKAKIS, Emmanouil, 20020 LAINATE (IT)
(74) Representative: Pizzoli, Antonio Mario

(56) References cited:
- FR-A- 1 082 614
- JP-A- S61 277 168
- JP-U- S56 160 791
- KR-A- 20120 107 730

## Description

### FIELD OF THE INVENTION

The present invention relates to the field of plants and methods for the disposal and recovery of constituent components of alkaline-type and zinc-carbon-type batteries. In particular, the present invention relates to a cutting station for cutting AA-type and/or D-type or C-type batteries and to a method for the dry separation and the recovery of the components of said batteries. The invention further relates to a system for implementing such a method.

### BACKGROUND ART

The huge dissemination of portable electric and electronic product requires the availability of discrete sources, i.e. self-standing units, capable of outputting electric current.

These discreet current sources mainly consist of primary batteries and secondary batteries, or accumulators. The first work according to an oxide-reduction reaction which occurs between two of their components and generates a transfer of electrons which, appropriately channeled, creates the required flow of current. Secondary batteries are instead rechargeable accumulators (e.g. the very common lithium batteries).

While secondary batteries (accumulators) have a relative long life and may be subjected to hundreds of recharging cycles before needing to be replaced, batteries proper (primary batteries) must be eliminated after only one life cycle. Given the extremely very high production volumes and the content of chemical species which are potentially hazardous for the environment, batteries pose considerable disposal problems.

Although there are many types of batteries based on different oxide-reduction processes, the vast majority of them (nearly 90% of the market) are of the zinc-carbon and of the alkaline type, which is an evolution of the zinc-carbon battery; in particular, alkaline batteries currently account for about 75-80% of the market, while zinc-carbon batteries account for 10-15%. These batteries are used in applications such as electric torches, toys, electrical instruments and miscellaneous electronics.

For both battery types, the generation of the electron flow is determined by a reduction reaction of manganese dioxide (IV), MnO₂, and concurrent oxidation of the metal zinc ion Zn²⁺.

In zinc-carbon batteries, the zinc (anode) forms the base and the cylindrical wall of the casing, while the manganese dioxide is immersed in a gelatinous paste also comprising ammonium chloride and carbon powder.

In alkaline batteries, the zinc is instead present in the form of power around an anode consisting of a metal bar; Zn and MnO₂ powders are immersed in a gelatinous paste of potassium hydroxide (KOH), which acts as an electrolyte and from which the name "alkaline" of these batteries derives.

The paste present in these batteries is also called "black paste" in the sector.

The recovery and recycling of the components of zinc-carbon (hereinafter also indicated as Zn-C) batteries and alkaline batteries is the subject of very many studies and publications. The recycling procedures of the batteries imply a series of operations.

Firstly, the batteries must be separated by type.

The first separation is of dimensional type and allows a first, very coarse, separation of the batteries according to the chemical component type, because the smaller batteries are not generally of the Zn-C or alkaline type; for example, they may be silver or mercury batteries, although the latter type has been nearly entirely phased out following the introduction of standards in most countries. This first separation may consist of a simple passage on vibrating belts or tables with openings of appropriate sizes increasing along the direction of transport of the batteries.

A second separation is more specifically related to the chemical type of the batteries. This type of separation may occur as a function of their density, as described for example in international patent application WO 00/08700 A1. The most common method is however based on X-ray imaging techniques which recognize the structure inside the battery (e.g. the arrangement of the electrodes, which may vary according to the battery type), as described, for example, in patents EP 795919 B1 and EP 1132992 B1; some recycling systems also include a manual separation, performed by human operators, for the batteries that the automated systems cannot safely assign to a specific type.

After separating the batteries into groups homogeneous by chemical type, which ensures the presence only of materials composing alkaline or zinc-carbon batteries, the black paste components must be extracted from them. According to the known technique, for the extraction, the batteries are grinded in some cases, or alternatively they may be opened in mechanized cutting stations; then, the particulate obtained from the grinding or the parts obtained by cutting are either washed or immersed in water or in aqueous based solutions, which leads to the dissolution or suspension of the black paste components in the liquid phase.

In this step, or immediately afterwards, the components which are not part of the black paste, such as the steel which forms the battery casing or the plastic materials which form the lining or seals thereof, must be separated from the solution. The materials are washed in various manners to detach the black paste residues.

The liquid phase thus obtained, containing the black paste components in solution or suspension, must then be subjected to chemical recovery processes of said components, in the same form in which they were present in the black paste or after appropriate chemical transformations, into a more manageable or useful form to be sent to the successive steps of recycling or direct reuse.

The main problem encountered with the systems of the prior art is that the mixture of materials obtained after the opening or grinding of the batteries is separated only in very coarse manner, so that the matter which is sent to the chemical recycling treatments is a mixture of unknown components, variable from one process to the other (also within the same plant), and which does not allow an effective chemical treatment as a consequence. For these reasons, nearly all battery recycling processes are pyrometallurgical; this implies high energy and environmental costs (emissions and waste).

With respect to grinding, the cutting of the batteries by means of mechanized stations promotes the separation of the *black paste* from the metal part and from the plastic part, because the cut parts have larger sizes than the grinded products. Typically, the batteries are cut by means of a steel blade which is preventively subjected to specific thermal treatments for its hardness and durability. Such treatments are established as a function of the materials which form the batteries. Specifically, cutting blades are used with straight cutting edge which is developed along a reference direction which, during the step of cutting, is orthogonal to the axis of the battery.

However, it has been seen that the use of the blade with straight cutting edge is accompanied by various drawbacks, including the short life of the edge due to the impact against the battery. The possible solution of increasing the thickness of the blade, in order to prolong its durability, is an inadequate solution. Indeed, a localized squashing of the casing of the battery occurs at the impact surface with the blade during the step of cutting. Following such a phenomenon, which becomes more relevant as the thickness of the blade increases, portions of the *black paste* remain trapped between the folds of the squashed surface. The removal of this portion is particularly difficult and is completed by means of various passages in cleaning tanks, with obvious disadvantages in terms of treatment process costs and time.

As far this issue, it is worth noting that in nearly all cases, the methods currently used for separating and recovering the parts which form a battery *(black paste, metal part and plastic part)* include one or more steps of washing and/or one or more passes in treatment tank. Such methods thus have strong limits in terms of eco-sustainability.

FR-1 082 614 A defines the preamble of claim 1.

According to the conditions shown above, the main task of the present invention is to provide a new station for cutting a battery and a new method for separating and recovering the constituent parts of the battery itself. In the scope of this task, it is a first object of the present invention to provide a cutting station which performs better than the traditional stations in terms of durability and reliability. It is another object to provide a method which allows the recovery of the *"black paste"* contained in a battery by means of "*dry*" operative steps, i.e. which do not include the use of washing stations and/or passages in treatment tanks. It is a not last object of the present invention to provide a method which is reliable and easy to implement at competitive costs.

### SUMMARY OF THE INVENTION

The present invention, as defined in claim 1, thus relates to a cutting station for cutting cylindrical batteries, i.e. batteries which have a substantially cylindrical body, which develops about a central axis between a first surface and second surface, which is transversal to said central axis. The cutting station comprises a substantially two-dimensional cutting blade, which identifies a cutting plane and a positioning device, which defines a seat for a battery to be cut, so that the central axis of the battery is substantially coplanar with the cutting plane identified by the two-dimensional blade. The cutting station further comprises pushing and moving means which determine a relative motion between the blade and the battery to be cut, along a direction of advancement parallel to the cutting plane. Following such a relative motion, the battery is cut into two halves by the blade. According to the invention, the blade comprises a cutting edge which defines at least one V-shaped notch. Such a notch faces one of the transversal surfaces of the battery when it is housed in the aforesaid seat and during the relative motion determined by the pushing and moving means. In particular, the battery impacts, at least partially, against the V-shaped notch following the relative motion determined by the pushing and moving means.

It has been seen that the use of a blade with V-shaped notch is particularly advantageous in production terms. In particular, such a solution increases the durability of the blade, decreasing at the same time the number and frequency of machine stops. At the same time, it has been seen that in the scope of a method for the dry separation of battery components, the cutting principle described above advantageously promotes the successive separation operation of the *black paste* of the batteries from the corresponding metal casing part which contains it.

The present invention, as defined in claim 8, also relates to a method for the dry separation of the components of cylindrical type batteries. More precisely, such a method has the purpose of separating the inner *black paste* from the metal part and from the plastic part present in the structure of the batteries. The method according to the invention is characterized in that it comprises at least the following steps:
a) cutting each of the batteries into two halves along a diametrical plane containing the central axis of the battery by means of a blade, the cutting edge of which defines at least one V-shaped notch and so that said notch impacts against a transversal surface of the battery;
b) mechanically striking the parts obtained by cutting the batteries so as to detach the *black paste* from the metal part and/or from the plastic part of the batteries;
c) separating, by means of vibration-sieving, the fragments obtained following step b) into a first fraction of fragments having a maximum size lower than a first predetermined value and a second fraction of fragments having a maximum size higher than said first predetermined value;
d) separating, by magnetic attraction, at least the first fraction so as to separate the metal material fragments from said *black paste.*

The method according to the invention allows to recover the *black paste* contained in the batteries without any passage in washing stations, with huge advantages in terms of eco-sustainability. In particular, nearly all the *black paste* is recovered by means of a relatively low number of steps which can be easily performed at absolutely competitive costs with respect to the traditional processes which include the use of washing stations and/or treatment baths.

Finally, the present invention further relates to a system for implementing the method shown above.

### LIST OF DRAWINGS

Further features and advantages of the present invention will become more apparent from the following indicative and thus non-limitative description of a preferred, but not exclusive embodiment of the invention, as shown in the accompanying drawings, in which:

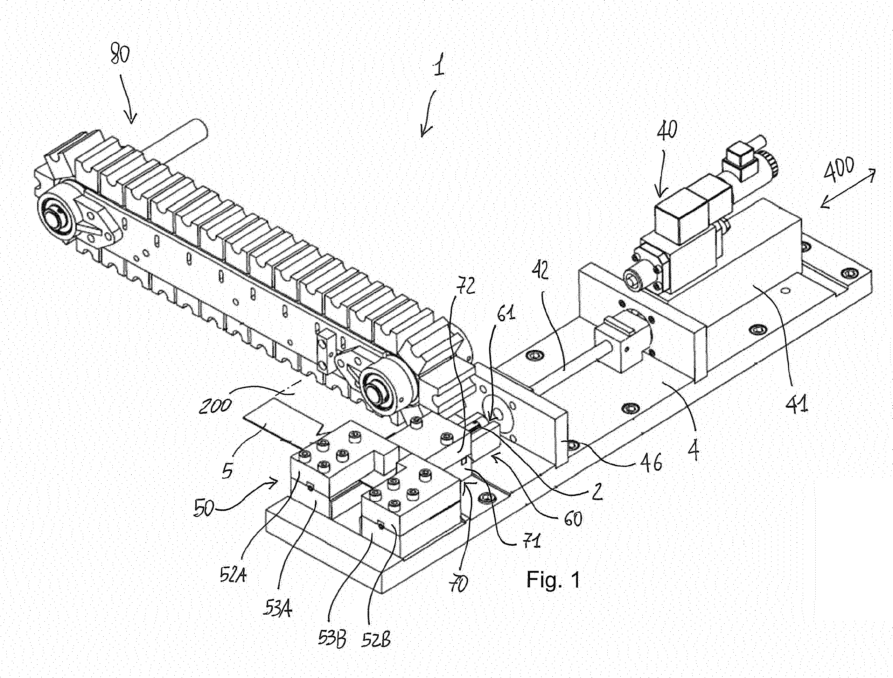

- figure 1 is a perspective view of a possible embodiment of a cutting station of a cylindrical-type battery according to the present invention;

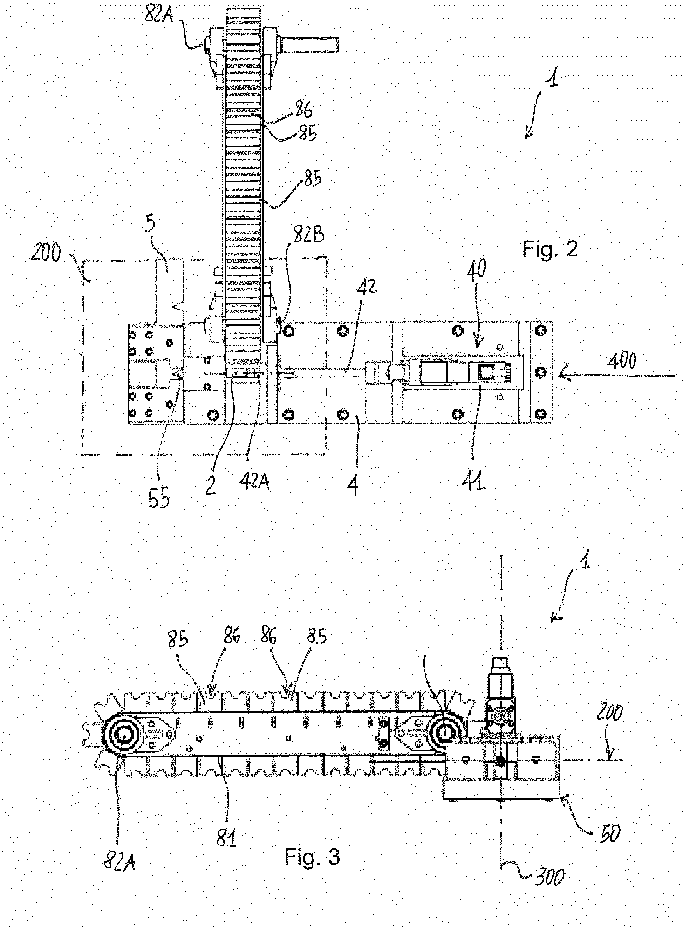

- figures 2 and 3 respectively are a plan view and a side view of the system of figure 1;
- figure 3 is a front view of the device in figure 1, in a first operative configuration;
- figures from 4 to 8 are views related to possible embodiments of a cutting blade in a cutting station according to the present invention;
- figures from 9 to 12 are views related to the cutting station in Figure 1 in a specific operative step of the station itself;
- figure 13 is a further axonometric view of an operating system comprising a cutting station according to the present invention;
- figure 14 is a perspective view of a possible embodiment of a system for separating and recovering the components of an cylindrical-type battery according to the present invention.
- figure 15 is a perspective view of a second possible embodiment of a system for separating and recovering the components of an cylindrical-type battery according to the present invention.
- figure 16 is a perspective view of a third possible embodiment of a system for separating and recovering the components of an cylindrical-type battery according to the present invention.

The same reference numbers and letters in the figures refer to the same elements or components.

### DETAILED DESCRIPTION OF THE INVENTION

With reference to the mentioned figures, the present invention thus relates to a cutting station, generally indicated by reference numeral 1, for cutting a pelight type and/or a flashlight and/or a R14-type battery 2. In all cases, a battery of each type has a substantially cylindrical body, which develops about a central axis 100 between a first transversal surface and a second transversal surface opposite to the first transversal surface. Such surfaces are substantially *"transversal"* to the central axis 100 of the battery 2 and correspond to the surfaces on which the electrodes for the operation of the battery itself are defined.

The cutting station 1 comprises a cutting device 50 provided with a blade 5 through which the cutting of the battery 2 is achieved. The blade 5 displays a substantially two-dimensional conformation which identifies a cutting plane 200. Substantially, the blade 5 develops between two parallel planes, the distance of which corresponds to the thickness S₁ of the blade itself. Given the two-dimensional configuration, such a thickness is thus much lower than the other sizes of the blade.

The cutting station 1 further comprises a positioning device 60 which defines a seat 61 for the battery 2. In particular, the blade 61 is shaped so that the central axis 100 of the battery 2 is substantially coplanar with the cutting plane 200 and one of the two transversal surfaces faces the blade 5.

According to the invention, the cutting station 1 further comprises pushing and moving means 40 which determine a relative motion between the blade 5 and the battery 2 along a direction of advancement 400, which is substantially parallel to said cutting plane 200. Such pushing and moving means 40 also provide the force/energy needed to allow the blade 5 to penetrate into the battery 2 i.e. to cut the blade itself. Following such a relative motion, and given the position of the central axis 100 coplanar with the cutting plane 200, the battery 2 is cut by the blade 5 into two halves 2A,2B along a diametrical plane containing the central axis 100 of the battery 2.

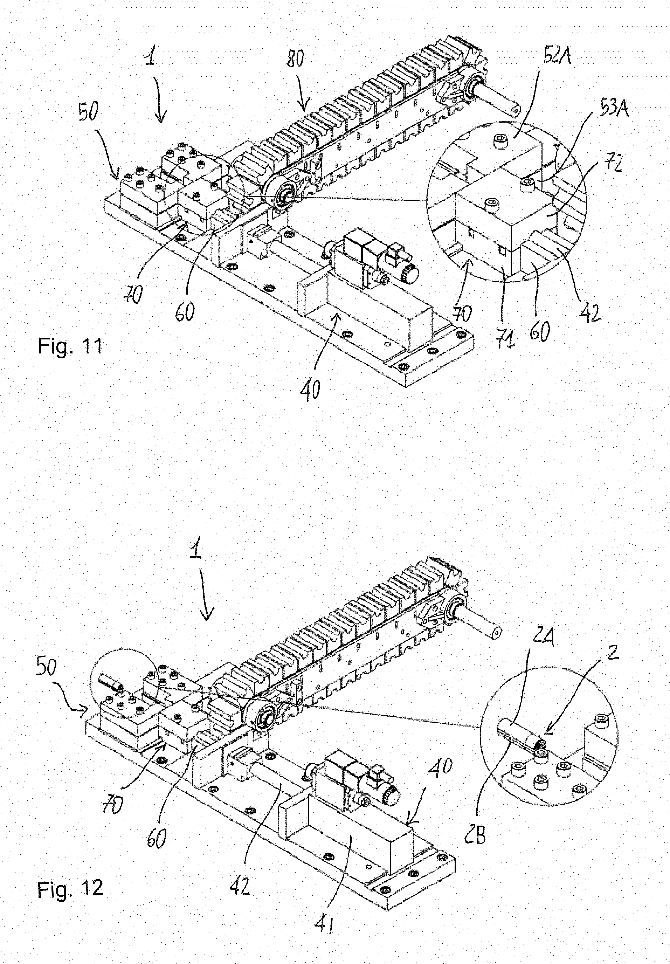

The cutting station 1 according to the invention is characterized in that the blade 5 comprises a cutting edge 51 which includes at least one V-shaped notch 55 which faces one of the transversal surfaces of the battery 2 when it is housed in the seat 61 defined above. In this manner, following the actuation of the pushing and moving means 40, the battery 2 impacts the blade 5 precisely at the notch 55, which cuts the battery 2 into two halves 2A,2B (see Figure 12). More precisely, the stretches 55A,55B of the notch 55 cut the battery 2 over its entire length, measured along the central axis 100. It has been seen that the V-shape advantageously increases the durability of the blade, i.e. the numbers of batteries which may be cut between two machine stops. In particular, it has been found that up to 2000 batteries can be cut with the same notch 55. The other sizes of the blade and of the batteries being equal, a blade with straight cutting edge can cut one hundred or so batteries at most.

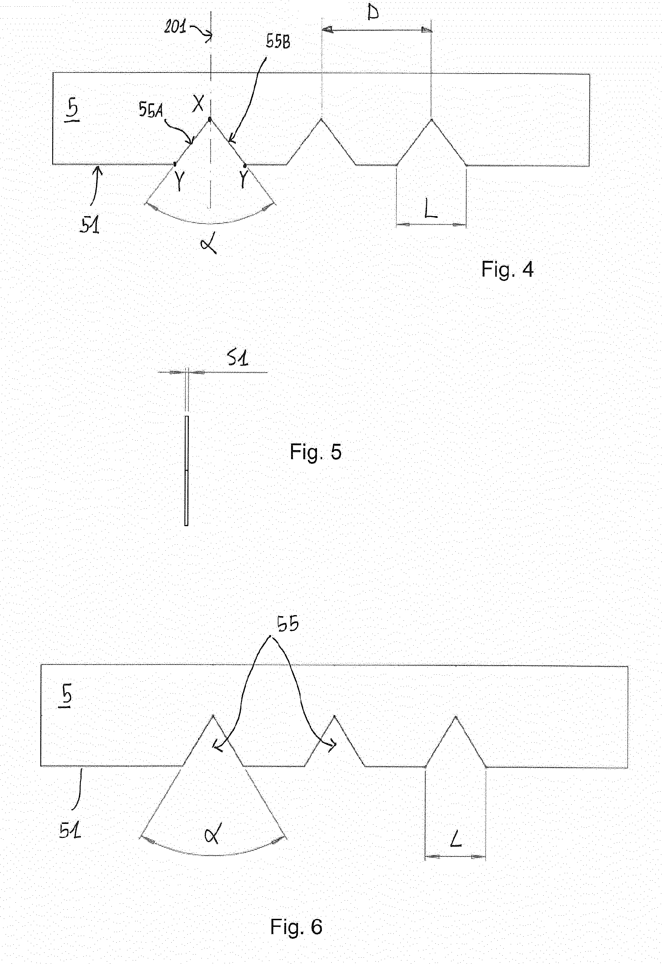

Figures from 4 to 8 show possible embodiments of the blade 5 according to the invention. In particular, the V-shaped of the notch 55 can be observed. The latter is defined by two cutting stretches 55A,55B, which are inclined by an angle α which substantially represents the opening angle of the notch. The two stretches 55A,55B intersect defining an *"innermost"* vertex (indicated by X in Figure 4) and are symmetric with respect to a reference axis 201. The latter is aligned with the central axis of the battery 2 during the step of cutting. Each of the two stretches 55A,55B of the blade 55 ends at an *"outermost"* vertex (indicated by Y in Figure 4) which represents an intersection point with a rectilinear portion of the cutting edge 51 which develops along a reference direction orthogonal to the axis 201. The shape of the notch 55 is identified by the values of the opening angle α and by its width L, meaning the distance between the two outermost vertexes Y defined above. According to the present invention, the opening angle α is chosen from a range of values comprised between 30° and 80°, while the value of the width L is comprised in a range between 10 and 45 mm. According to another aspect, the thickness S₁ of the blade 5 (indicated in figure 5) is comprised in a range between 1 and 4 mm. The blade is preferably made of harmonic steel.

In general, the shape of the notch 55 is chosen as a function of the size, i.e. of the dimensions, of the cylindrical-ype batteries to be cut. In this regard, a classification of the cylindrical batteries is universally used according to their sizes. Mini batteries are indicated by the letters AAA, and penlight batteries are indicated by the letters AA. R14 batteries are indicated by the letter C and flashlight batteries are indicated by letter D.

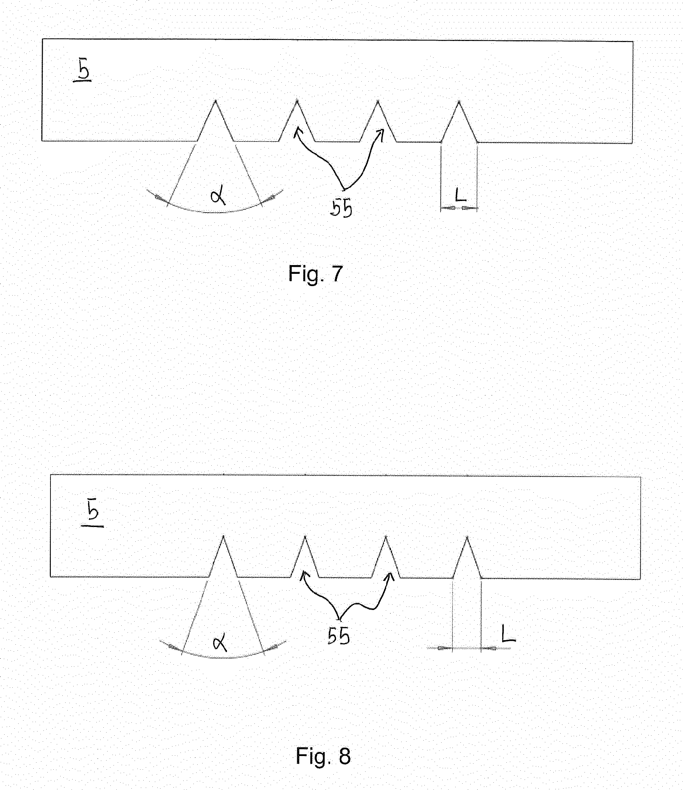

Figure 4 shows an embodiment of the blade 5 which has been found to perform particularly well in the cutting of D-type battery blades. Figures 6 and 7 show blades which are found to perform particularly well in the cutting of C-type and AA-type batteries, respectively. Finally, Figure 8 shows a blade 5 which is particularly adapted to cutting AAA-type batteries. For each of the embodiments illustrated in Figures 4, 6, 7 and 8 indicated above, the table shows the value of the opening angle α and of the width L of the notch 55. It is worth noting that for each size indicated in the table, the corresponding values of the opening angle α and of the width L are to be considered preferred, and therefore not exclusive.

| ***SIZE*** | ***OPENING ANGLE*** - ***α [deg°]*** | ***Width* - *L [mm]*** |
|---|---|---|
| AAA | 38.58 | 14 |
| AA | 48.46 | 18 |
| C | 61.93 | 30 |
| D | 74.47 | 38 |

Again according to a preferred embodiment shown in the figures, the edge 51 of the blade 5 comprises a plurality of notches 55, each of which is V-shaped. Even more preferably, all the notches 55 of said plurality have the same shape in terms of width L and of opening angle α. The notches 55 are arranged at a given distance D, measured as the distance between the innermost vertexes X of two adjacent notches. Advantageously, the presence of multiple notches 55 allows a greater operative versatility. Indeed, after a given number of batteries cut consecutively by means of the first V-shaped notch, the same blade 5 may be positioned in the cutting device 50 so that the second V-shaped notch, different from the first one, is used to cut another number of batteries.

According to a preferred embodiment shown in the figures, the cutting device 50 comprises locking means for locking the cutting blade 5 in a fixed position. At the same time, the pushing and moving means 40 move the battery 2 between a first position, in which the battery 2 is in the seat 61 of the positioning device 60, and a second position having reached which the battery 2 is cut into two halves 2A,2B. Preferably, the cutting station 1 also comprises guiding means for guiding the movement the battery 2 along a direction of advancement which is parallel to the cutting plane 200 defined above and thus parallel to the central axis 100 of the battery 2.

According to a possible embodiment shown in the figures, the cutting device 50 comprises a pair of supporting elements 53A,53B of the blade 5 installed on a base 4 of the cutting station 1. The supporting elements 53A,53B are distanced and positioned symmetrically with respect to a reference plane 300 which is substantially vertical and parallel to the direction of advancement 400 along which the battery 2 is moved by the pushing and moving means 40. For each supporting element 53A,53B, the locking means of the blade 5 comprise a corresponding locking element 52A,52B. The latter is fixed in removable manner to the corresponding supporting element 53A, 53B and in position distanced from the other locking element. The blade 5 thus remains locked between the supporting elements 53A,53B and the corresponding locking elements 52A,52B. In particular, the blade 5 is arranged so that the V-shaped notch 55 is arranged in the space comprised between the supporting elements 53A,53B and between the corresponding locking elements 52A,52B. In particular, the amplitude of such a space, i.e. the width measured orthogonally to the reference plane 300, is such as to allow the passage of the battery 2 during the step of cutting it.

Again with reference to the solution illustrated in the figures, the pushing and moving means 40 preferably comprise a hydrodynamic actuator 41 installed on the base 4 in a position substantially opposite to the cutting device 50, in position evaluated with respect to that of the positioning device 60. The hydrodynamic actuator 41 comprises a rod 42, the end 42A of which is configured to act on the battery 2. In this regard, the end 42A can act directly on the transversal surface of the battery 2 opposite to that which the blade 5 faces. Alternatively, the end 42A could act indirectly on such a transversal surface, e.g. providing a pusher element connected to the end 42A itself and acting directly on the transversal surface.

In all cases, the rod 42 can be actuated between the minimum extension position, in which the end 42A does not interact with the battery 2, and a maximum extension position, having reached which the battery 2 is cut due to the blade 5. Instead, the minimum extension condition of the rod 42 is such that the end 42A does not interact with the battery 2. The latter condition substantially corresponds to a condition of deactivation of the hydrodynamic actuator 41 and thus to a condition in which the battery 2 to be cut can be loaded into the seat 61 of the positioning device 60.

The travel of the rod 42 between the two conditions defined above (minimum and maximum extension) identifies the direction of advancement 400 of the battery 2 defined above. In particular, following the activation of the hydraulic actuator 41, the rod 42 moves starting from the minimum extension condition. At a given point, the end of the rod 42 starts pushing the battery 2 towards the blade 5 along the direction of advancement 400. Such a push continues until the cutting of the battery 2 is completed due to the cutting blade 5.

According to another aspect, the cutting station 1 preferably comprises guiding means of the rod 42. In the form illustrated in the figures, such means are defined by a wall 46 fixed to the base 4 and interposed between the positioning device 60 and the actuator 41. Such a wall 46 comprises a through hole crossed by the rod 42 during its travel between the two conditions defined above. Advantageously, such a solution contributes to avoiding lateral bending of the rod 42 due to the load which is generated on the rod itself during the cutting effort.

According to a further aspect, the guiding station comprises guiding means of the battery 2 to guide it along the direction of advancement 400, between the first position and the second position. Such means have the purpose of maintaining the central axis 100 of the battery 2 in position coplanar with the cutting plane 200 during the step of cutting the battery itself. In a preferred embodiment shown in the figures, such guiding means comprise a chamber 70 defined by a lower half-shell 71 installed on the base 4 and by an upper half-shell 72 fixed to the lower half-shell 71 by means of removable fixing means. Following their union, the two half-shells 71, 72 configure a cylindrical passage, the axis of which is aligned with that of the battery 2 thus remaining coplanar with the cutting plane 200 identified by the blade 5. Advantageously, the two half-shells 71,72 maintain such a coplanar condition during the step of cutting so as to ensure the cutting along the diametrical plane.

According to a further aspect shown in the figures, the cutting station 1 is preferably provided also with a loading device 80 for automatically loading/positioning the battery 2 in the seat 61 of the positioning device 60. The figures show a possible embodiment of such a loading device 80 which loads according to a substantially *"revolver"* principle. In particular, the loading device 80 comprises a belt element 81 installed between two pulleys 82A,82B supported by a supporting frame (not shown in the figures). A first one 82A of these pulleys is a drive pulley because it is actuated by a motor, preferably electric. The other pulley 82B is only used for transmission of the belt 81. On the latter, a plurality of battery-holder elements 85 are arranged each of which defines a seat 86 in which a battery 2 can be positioned so that its axis remains parallel to that of rotation of the pulleys 82A,82B. A battery 2 intended to be cut by the blade 5 is loaded into each seat 86. The battery 2 may be loaded manually or alternatively automatically, exploiting for example a conveyor belt (not shown) as conveying and loading element.

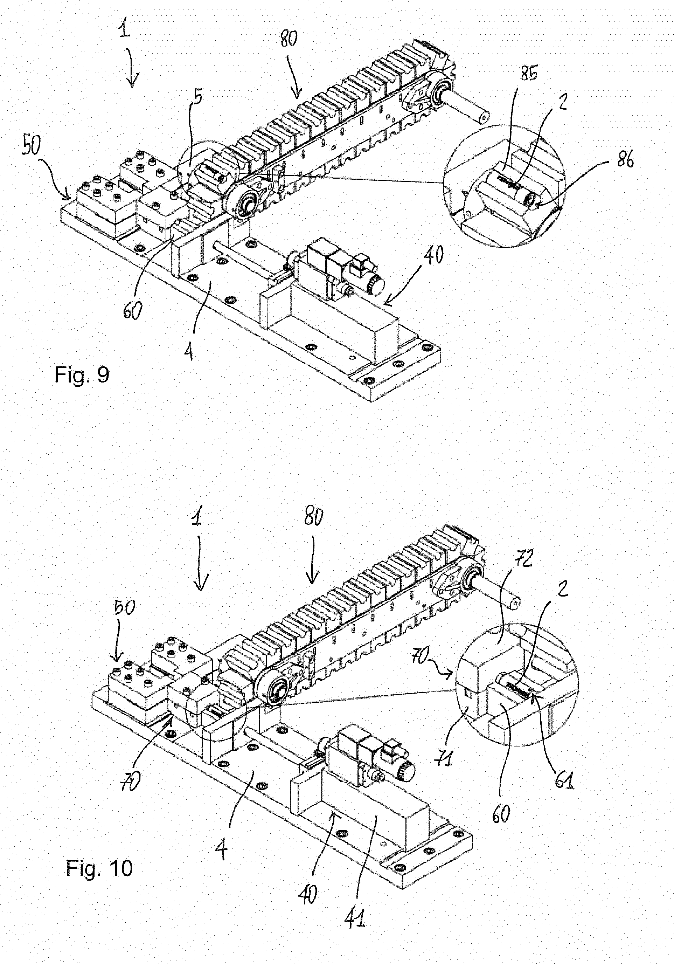

The loading device 80 is positioned so that the axis of the pulleys is parallel to the direction of advancement 200 and so that one of the pulleys is arranged near the loading device 60 of the cutting station 1. Following the rotation of the belt 81, the battery 2 housed in a seat 86 of one battery-holder element 85 reaches an unloading end of the loading device 80. At each unloading end, the rotation of the battery-holder element 85, determined by the curvature of the belt 81, determines the release of the battery 2 from the seat 86. The belt 81 is arranged so that the battery 2, exiting from the seat 86 of the belt 81, is positioned autonomously inside the seat 61 configured by the positioning device 60. Figures from 9 to 12 show the operating principle of the cutting station 1 shown in the figures. In particular, Figure 9 shows the station during the step of automatically loading the battery 2. In the condition of Figure 9, the battery 2 is still housed in the seat 86 of a corresponding battery-holder element 85 of the battery 81.

In the condition shown in Figure 10, the battery 2 is positioned in the seat 61 of the positioning device 60 and its central axis 100 is coplanar with the cutting plane 200. Substantially, the battery 2 is ready to be pushed, by the action of the hydraulic actuator 41, against the blade 5.

Figure 11 refers to the step of cutting, i.e. in which the battery 2 is pushed against the blade 5 by means of the rod 42 of the hydraulic actuator 41. In particular, during its travel along the direction of advancement 400 and during the entire step of cutting, the battery 2 remains, due to the guiding chamber 70, a position such that the central axis 100 remains coplanar with the cutting plane 200 of the blade 2. In this manner, at the end of the cut, the battery 2 is split into two halves 2A, 2B, as apparent from the enlargement shown in Figure 12. In this regard, in the condition in Figure 12, the rod 42 has reached it maximum extension condition which substantially coincides with the completion of the step of cutting.

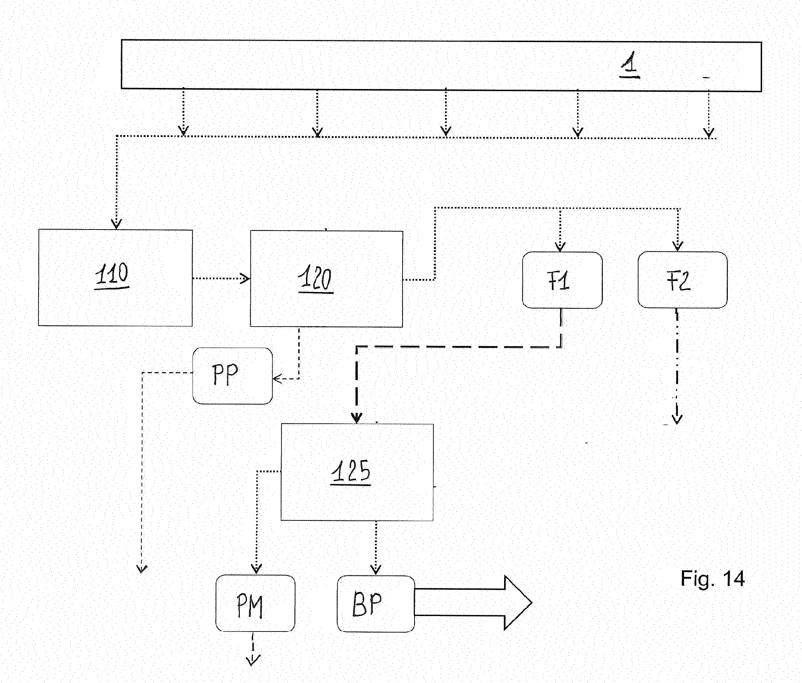

The present invention also refers to the method for the dry separation of the components of AA-type batteries 1. In particular, the purpose of such a method is to separate the *black paste,* inside the batteries, from the metal part, forming the casing of the batteries themselves, and from any plastic materials which form linings or seals of the batteries. Figure 14 diagrammatically shows a plant according to the invention which allows the implementation of such a method.

In detail, the method according to the invention comprises a first step which envisage of cutting each battery 2 in two halves 2A,2B along a diametrical plane containing the central axis 100 of the battery itself, in particular the cutting of the battery 2 is preferably performed by means of a blade 5, which identifies a cutting plane 200 and which is provided with a V-shaped notch. In particular, according to a principle already explained above, each battery 2 is cut by generating a relative motion between the battery 2 and the blade 5, so that the central axis 100 of the battery 2 remains coplanar with the cutting plane 200 and so that the battery 2 impacts against the blade 5 at the V-shaped notch 55. Preferably, according to a known solution, the step of cutting is preceded by a first preliminary step of dimensionally separating the batteries and by a second preliminary step of separating (following said first step) in which the batteries are separated as a function of their chemical structure.

The separating method of the components according to the invention comprises a second step, following the first, which includes mechanically striking the two halves 2A,2B of each battery 2 so as to promote the detachment of the black paste from the metal part forming the metal casing defining the battery itself.

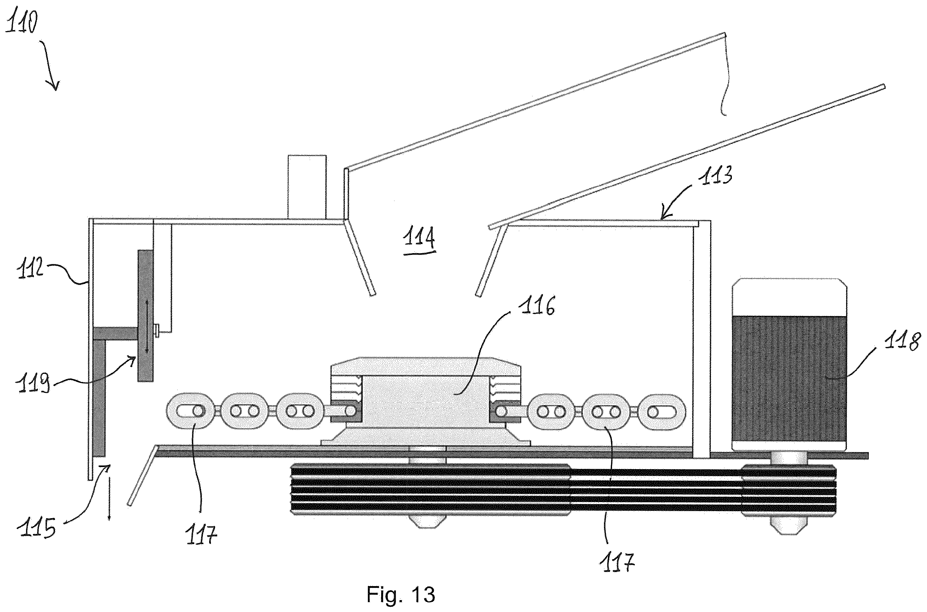

Such a second step may be advantageously achieved inside a disaggregation unit 110, a preferred embodiment of which is shown in Figure 13. Specifically, the disaggregation unit 110 comprises a casing defined by a base 111 from which a side containing wall 112 develops so as to generate a volume closed on top, i.e. in position opposite to the base 111, by a lid 113. The latter defines an opening 114 through which the halves 2A,2B of the previously cut battery 2 are loaded. As diagrammatically shown in Figure 14, halves 2A,2B deriving from batteries of different size (e.g. AA, AAA, C and D type), but having the same chemical components of the black paste, except for the different ratio by weight of steel, may be introduced into the disaggregation unit 110. The disaggregation unit 110 comprises a central pin 116 which emerges internally. One or more disaggregation chains 117 made of metal material are connected to such a central pin 116. The disaggregation unit 110 is further provided with a motor assembly 118 connected to the central pin 116 to rotate it together with the chain or chains 117. Due to their rotation, in a few seconds the chains 117 strike the cut batteries determining the detachment of the *black paste* in a substantially granular form. Preferably, the disaggregation unit 110 also comprises an unloading section 115 of the material struck and disaggregated by means of the chains 117. Even more preferably, the disaggregation unit 110 is provided with closing means 119 of said unloading section. Such closing means 119 are activated during the rotation of the chains 117 and then deactivated at the end of said rotation to promote the evacuation of the fragments which are generated.

In this regard, the fragments generated in this second step may be structurally homogeneous, i.e. consisting of a single component (*black paste,* metal or plastic) or heterogeneous, i.e. consisting of multiple components (e.g. *black paste* combined with metal and/or with plastic). In all cases, such fragments have different sizes. The method according to the invention includes a third step which consists in separating, by means of vibration-sieving, the fragments according to their size. In particular, during such a third step, the fragments are separated at least into a first fraction F1 and at least into a second fraction F2, wherein such fragments have a maximum size which is respectively higher and lower than a predetermined value. Preferably, such a predetermined value is approximately 1 mm.

The separation into two fractions is preferably performed in a vibration-sieving station 120 comprising at least first sieving means comprising a first vibrating sieve defining openings of amplitude corresponding to said predetermined value. The first fraction F1 will consist of fragments which cross the first sieve, while the second fraction F2 will consist of fragments which remain over said sieve. By choosing a predetermined value, in the order of 1 mm or a few millimeters, the first fraction F1 will consist mainly of *black paste* granules. In such a first fraction F1 there may also be small fragments of metal and plastic.

The method according to the invention includes at least a fourth step consisting in the step of magnetically separating the first fraction F1, i.e. separating, by magnetic attraction, the metal part PM from the *black paste* BP. The latter may thus be collected and then subjected to a chemical treatment in order to retrieve its constituent components. At the same time, the metal part PM can be collected and reused or in all cases disposed of independently from the *black paste* BP.

The step of magnetically separating may be performed in a magnetic separation unit 125 (or magnetic separator 125) comprising magnetic means adapted to attract the fragments of the metal part related to the casing and/or to the electrodes of the batteries.

In the *black paste* separated by means of the magnetic separation 125 there may be small fragments of plastic which can be disposed of in the field of the chemical treatment indicated above. Advantageously, due to the step of vibration-sieving, due to the different density, the large size plastic fragments tend to collect over the vibrating sieve in a different position from the metal fragments and/or the heterogeneous fragments having size higher than the predetermined value in all cases. So, the larger size plastic fragments may be advantageously collected and separated from the second fraction F2. The plastic part (indicated by PP) may be thus recovered and recycled in one of the many known processes adapted for the purpose.

The second fraction F2 of fragments, mainly consisting of metal fragments, may also undergo a step of magnetic separation or alternatively be disposed of, e.g. in a foundry or more generally in the field of a fusion process in which the presence of elements such as zinc-carbon-manganese is acceptable.

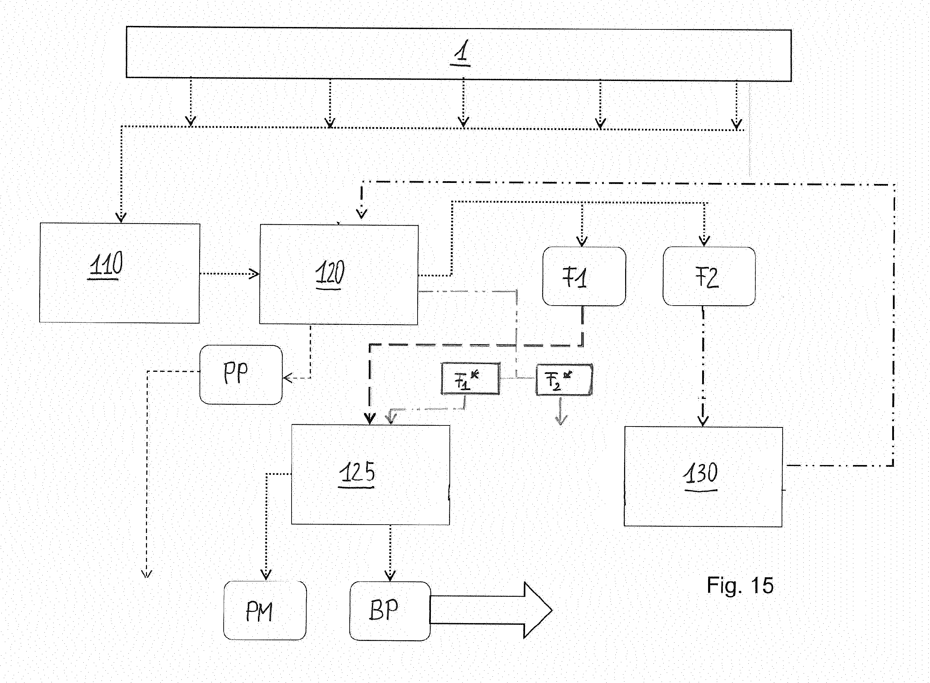

Alternatively, the second fraction F2 may undergo further steps of dry treatment. For example, according to a possible embodiment of the method diagrammatically illustrated in Figure 15, a step of crushing the second fraction F2 is included having the purpose of detaching the metal fragments from the hardened *black paste* on them. Preferably, such a crushing is made in a crushing unit 130 (or crushing mill 130) as indicated in the system diagrammatically shown in Figure 15. In addition to the detachment of the *black paste* from the metal part, the crushing determines, at least in part, an advantageous reduction in size of the fragments.

In this variant, the product deriving from the crushing is subjected to a further step of vibration-sieving. This crushing product is broken down into a further first fraction F1* and into a further second fraction F2*, the fragments of which have a diameter lower and higher than the first predetermined value, respectively. Said further fraction F1* is then subjected to the step of magnetic separation according to that shown above for the first fraction F1 defined to comment Figure 14.

The second fraction F2*, obtained by means of the second passage in the vibration sieve 120, will mainly consist of metal fragments which may be possibly separated by means of the further step of magnetic separation. The metal fragments may then be reused, e.g. in the field of a metal casting process. Alternatively, at the outlet of the vibration-sieving station 120, the second fraction F2* may be reused directly, e.g. in a foundry for the production of manganese steel, without the further step of magnetic separation indicated above.

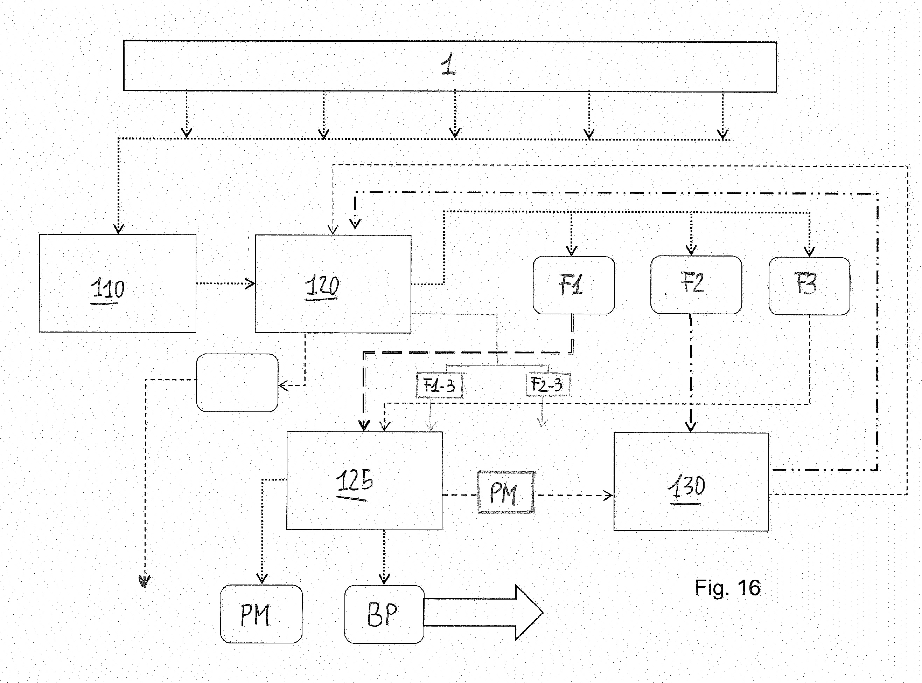

Also in this case, in the field of vibration-sieving of the crushing products in the crushing mill 130, a plastic part PP, separated from the second fraction F2* indicated above, may collect over the sieve of the vibration-sieving 120 and can thus be recovered and recycled. With reference to Figure 16, according to a preferred embodiment of the method according to the invention, the step of vibration-sieving is performed so as to separate the fragments into a first fraction F1, into a second fraction F2 and into a third fraction F3. In the first fraction, the maximum size of the fragments is lower than a first predetermined value, in the second fraction F2 is higher than said first predetermined value and lower than a second predetermined value, and in the third fraction F3 the maximum size of the fragments is higher than the second predetermined value. Even more preferably, the first predetermined value is about 1 mm and wherein said second predetermined value is about 5 mm.

In this case, in order to obtain the three fractions F1, F2, F3 which are dimensionally homogeneous, the vibration-sieving station 120 comprises at least a first vibrating sieve, which defines openings of size corresponding respectively to the first predetermined value, and at least a second vibrating sieve, which defines opening of size corresponding to the second predetermined value. The third fraction F3 of fragments (having maximum size higher than said second predetermined value) is defined by the fragments of the second vibrating sieve which were not sieved.

The first fraction F1 and the second fraction F2 are processed according to the same methods described above with reference to Figure 15, to which reference is made. Substantially, the first fraction F1 is subjected to magnetic separation, while the second fraction F2 is crushed and then the respective crushing products are subjected to a successive vibration-sieving. The latter step determines the separation into two fractions F1*-F2*, not indicated in Figure 16 only for the sake of clarity.

The third fraction F3 will mainly consist of metal fragments, the maximum size of which is higher than the second predetermined value. However, such a third fraction F3 may also comprise heterogeneous elements made of plastic and hardened *black paste,* i.e. in the form of clumps. Preferably, the third fraction F3 is magnetically separated in order to separate the fragments of the mixed part PM consisting of homogeneous fragments of plastic or hardened *black paste* or of heterogeneous fragments consisting of *black paste* and plastic.

Such a mixed part PM is then subjected to the same steps of treating provided for the second fraction F2. More precisely, the mixed part PM undergoes a step of crushing in the crushing station 130 the main purpose of which is to crush the *black paste* clumps. The products of such a crushing are sent directly to the vibration-sieving station 120. Alternatively, the crushed products could be sent firstly to the disaggregation station 110 and only later to the vibrating sieving station 120. The preventive passage in the disaggregation station 110 further promotes the separation of the fragments of *black paste* from those of plastic material.

The passage of the crushed products in the vibration-sieving station allows to collect a further plastic part PP consisting of plastic fragments of maximum size higher than the second predetermined value. At the same time, such a passage determines at least one further first fraction F1-3 and at least a second fraction F2-3 of fragments having a maximum size lower and higher than the first predetermined value. Also in this case, the first fraction F1-3 and/or the second fraction F2-3 deriving from the second passage in the vibration-sieving station 120 may be subjected to a further step of magnetic separation to separate the metal part PM from the *black paste* BP. Alternatively, the second fraction F2-3 could be directly recycled.

So, the present invention further relates to a system for implementing the method shown above. Such a system further comprises at least one cutting station 1, preferably having the peculiarities described above, a disaggregation station 110, operatively downstream of the cutting station 1, a vibrating sieving station 120 and at least one magnetic separation station 125. According to a preferred embodiment, the system further comprises a grinding station 130 with the purposes described above.

## Claims

1. A cutting station (1) for cutting a cylindrical type battery, wherein said battery (2) comprises a body which develops about a central axis (100) between a first transversal surface and a second transversal surface, wherein the cutting station (1) comprises:
- a cutting blade (5), which identifies a cutting plane (200);
- a positioning device (60), which defines a seat (61) for said battery (2), such that the central axis (100) of said battery (2) is substantially coplanar with said cutting surface (200);
- pushing and moving means (40), which determine a relative motion between said blade (5) and said battery (2) along a direction of advancement (400) parallel to said cutting plane (200), so that following said relative motion, said battery (2) is cut by said blade (5) into two halves (2A,2B),
**characterized in that** said blade (5) comprises a cutting edge (51) which defines at least one V-shaped notch (55) which faces one of said transversal surfaces of said battery (2) when it is housed in said seat (61), said battery (2) at least partially impacting against said V-shaped notch (55) following said relative movement determined by said pushing and moving means (40).

2. A cutting station (1) according to claim 1, wherein said cutting edge (51) of said blade (5) defines a plurality of V-shaped notches (55).

3. A cutting station (1) according to claim 1, wherein said V-shaped notch (55) is defined by two cutting stretches (55A,55B), which intersect at an innermost vertex (X) and each of which ends at an outermost vertex (Y), said stretches (55A,55B) identifying an opening angle (α) of said notch (55) and a width (L) of said notch (55) evaluated as the distance between the outermost vertexes (Y) of said stretches (55A, 55B), wherein said opening angle (α) is chosen in a range between 30° and 80° and wherein said width (L) is chosen in a range from 10 and 45 mm.

4. A cutting station (1) according to any one of the claims from 1 to 3, wherein said cutting station (1) comprises a locking device (50), which locks said blade (5) in a fixed position and wherein said pushing and moving means (40) move said battery (2) between a first reference position, in which said battery (2) is housed in said seat (61) of said positioning device (60), and a second reference position upon the reaching of which said battery (2) is cut into two halves (2A,2B) due to the impact with said blade (5).

5. A cutting station (1) according to claim 4, wherein said cutting station (1) comprises guiding means (70,71,72) for guiding the movement of said battery (2) along said direction of advancement (400) between said first reference position and said second reference position (P2).

6. A cutting station (1) according to claim 4 or 5, wherein said pushing and moving means (40) comprise a hydraulic actuator (41) provided with a rod (42) the end (42A) of which acts, either directly or indirectly, on a transversal surface of said battery (2) opposite to the transversal surface which faces said V-shaped notch (55) of said blade (5), said rod (42) being movable between a minimum extension configuration, in which said end (42A) does not interact with said battery (2), and a maximum extension configuration upon the reaching of which said battery (2) occupies said second reference position.

7. A cutting station (1) according to any one of the claims from 1 to 6, wherein said station comprises a loading device (80) for automatically positioning said battery (2) in said seat (61) of said positioning device (60).

8. A method for the dry separation of components of cylindrical type batteries (2), wherein said method is **characterized in that** it comprises the steps of:
a) cutting each of said batteries (2) into two halves (2A,2B) along a diametrical plane containing the central axis (100) of said battery (2), said battery (2) being cut by means of a blade (5) the cutting edge (51) of which defines at least one V-shaped notch (55) and so that said notch (55) impacts against a transversal surface of said battery (2);
b) mechanically striking the halves (2A,2B) obtained by cutting said batteries (2) so as to detach the *black paste* from the metal part and/or from the plastic part of said batteries (2);
c) separating, by means of vibration-sieving, the fragments obtained following step b) into a first fraction (F1) of fragments having a maximum size lower than a first predetermined value and a second fraction (F2) of fragments having a maximum size higher than said first predetermined value;
d) separating, by magnetic attraction, said at least a first fraction (F1) so as to separate the metal material fragments from said *black paste.*

9. A method according to claim 8, wherein said method further comprises the steps of:
e) crushing the fragments forming said second fraction (F2) so as to disaggregate the hardened *black paste;*
f) separating, by means of vibration-sieving, the crushed product generated during step e) of vibration-sieving so as to separate it into a further first fraction (F1*) and a further second fraction (F2*) consisting of fragments, the maximum size of which is respectively lower and higher than a predetermined value, either equivalent to or lower than said first predetermined value;
g) separating, by magnetic attraction, said at least further first fraction (F1*) so as to detach the metal material fragments from said *black paste.*

10. A method according to claim 9, wherein, in said step c), said vibration-sieving is achieved so as to separate a third fraction (F3) of fragments so that the fragments of said second fraction (F2) have a maximum size which is higher than said first predetermined value and lower than a second predetermined value, and the fragments of said fraction (F3) have a maximum size higher than said second predetermined value and wherein said method comprises the steps of:
e1) crushing the fragments forming said second fraction (F2) so as to obtain the disaggregation of said *black paste;*
f1) separating, by means of vibration-sieving, the crushed product generated during step e) of vibration-sieving so as to separate it into a further first fraction (F1*) and a further second fraction (F2*) comprising fragments, the maximum size of which is respectively lower and higher than a predetermined value, either equivalent to or lower than said first predetermined value;
g1) separating, by magnetic attraction, said at least further first fraction (F1*) so as to detach the metal material fragments from said *black paste.*

11. A method according to claim 10, wherein said first predetermined value is about 1 mm and wherein said second predetermined value is about 5 mm.

12. A method according to claim 10 or 11, wherein said method comprises the steps of:
h) separating, by magnetic attraction, said third fraction (F3) so as to separate the metal fragments from a mixed part (PM) consisting of plastic material fragments and/or of *black paste;*
l) crushing said mixed part (PM) so as to obtain the disaggregation of said *black paste;*
m) separating, by means of vibration-sieving, the crushed product generated during step 1) of vibration-sieving so as to separate it into a further first fraction (F1-3) and a further second fraction (F2-3) consisting of fragments the maximum size of which is respectively lower and higher than a predetermined value, either equivalent to or lower than said first predetermined value;
n) separating, by magnetic attraction, said at least further first fraction (F1-3) so as to detach the metal material fragments from said *black paste.*

13. A method according to any one of the claims from 8 to 12, wherein in said step a) said batteries are cut by means of a cutting station (1) according to any one of the claims from 1 to 7.

14. A method according to any one of the claims from 8 to 13, wherein said step b) is achieved in a disaggregation station (110), which comprises a casing defined by a base (111), a lateral containing structure (112) and an upper closing wall (113) defining an opening (114) for inserting said cut batteries (2), said disaggregation station comprising a central body (116) pivoting on said base (111) to which at least one chain (117) is connected, said disaggregation station (110) comprising a motor assembly (11) to turn said central body (116) and said chain (117) connected to it.

15. A system for implementing the method according to claim 8, wherein said system comprises at least:
- a cutting station (1) according to any one of the claims from 1 to 7;
- a disaggregation station (110), in which said batteries (2) cut in said cutting station (1) are introduced, said station being configured to strike said batteries cut so as to detach the *black paste* from the metal part and/or from the plastic part;
- a vibration-sieving station (120), in which the fragments obtained by means of said disaggregation station (110) are loaded, said vibration-sieving station (120) comprising at least one vibrating sieve for separating said first fraction (F1) of fragments having a maximum size lower than a first predetermined value, from said second fraction (F2) of fragments, having a maximum size higher than said first predetermined value;
- a magnetic separation station (125), in which said first fraction (F1) of fragments is loaded, said magnetic separation station (125) comprising magnetic attraction means which in an activation condition separate the magnetic fragments from the *black paste.*

## Patentansprüche

1. Schneidestation (1) zum Schneiden einer Batterie zylindrischer Bauart, wobei die Batterie (2) einen Korpus aufweist, der sich um eine Mittelachse (100) zwischen einer ersten transversalen Fläche und einer zweiten transversalen Fläche erstreckt, wobei die Schneidestation (1) aufweist:
- eine Schneideklinge (5), die eine Schneidebene (200) bestimmt;
- eine Positioniervorrichtung (60), die eine Aufnahme (61) für die Batterie (2) definiert, so dass die Mittelachse (100) der Batterie (2) im Wesentlichen koplanar mit der Schnittfläche (200) ist;
- Mittel zum Verschieben und Bewegen (40), die eine Relativbewegung zwischen der Klinge (5) und der Batterie (2) entlang einer Vorschubrichtung (400) bestimmen, parallel zur Schneidebene (200), so dass die Batterie (2) gemäß der Relativbewegung mittels der Klinge (5) in zwei Hälften (2A, 2B) geschnitten wird,
**dadurch gekennzeichnet, dass**
die Klinge (5) eine Schneidekante (51) aufweist, die zumindest eine V-förmige Einkerbung (55) definiert, die zu einer der transversalen Flächen der Batterie (2) zeigt, wenn diese in der Aufnahme (61) untergebracht ist, wobei die Batterie (2) gemäß der Relativbewegung, die durch die Mittel zum Verschieben und Bewegen (40) bestimmt ist, zumindest teilweise gegen die V-förmige Einkerbung (55) stößt.

2. Schneidestation (1) gemäß Anspruch 1, wobei die Schneidekante (51) der Schneideklinge (5) eine Vielzahl von V-förmigen Einkerbungen (55) definiert.

3. Schneidestation (1) gemäß Anspruch 1, wobei die V-förmige Einkerbung (55) durch zwei Schneidestrecken (55A, 55B) definiert ist, die sich an einem innersten Schnittpunkt (X) treffen und jeweils an einem äußersten Schnittpunkt (Y) enden, wobei die Strecken (55A, 55B) einen Öffnungswinkel (α) der Einkerbung (55) und eine Breite (L) der Einkerbung (55) bestimmen, ermittelt als Abstand zwischen den äußersten Schnittpunkten (Y) der Strecken (55A, 55B), wobei der Öffnungswinkel (α) in einem Bereich zwischen 30° und 80° gewählt wird und die Breite (L) in einem Bereich zwischen 10 und 45 mm gewählt wird.

4. Schneidestation (1) gemäß einem der Ansprüche 1 bis 3, wobei die Schneidestation (1) eine Verriegelungsvorrichtung (50) aufweist, die die Klinge (5) in einer festen Position hält, und wobei die Mittel zum Schieben und Bewegen (40) die Batterie (2) zwischen einer ersten Referenzposition, in der die Batterie (2) in der Aufnahme (61) der Positioniervorrichtung (60) aufgenommen ist, und einer zweiten Referenzposition, bei deren Erreichen die Batterie (2) durch das Zusammenstoßen mit der Klinge (5) in zwei Hälften (2A, 2B) geschnitten wurde.

5. Schneidestation (1) gemäß Anspruch 4, wobei die Schneidestation (1) Mittel zur Führung (70, 71, 72) aufweist, um die Batterie (2) entlang der Vorschubrichtung (400) zwischen der ersten Referenzposition und der zweiten Referenzposition (P2) zu führen.

6. Schneidestation (1) gemäß einem der Ansprüche 4 oder 5, wobei die Mittel zum Schieben und Bewegen (40) einen hydraulischen Antrieb (41) mit einer Stange (42) aufweisen, deren Ende (42A), direkt oder indirekt, auf eine transversale Fläche der Batterie (2) gegenüber der transversalen Fläche wirkt, die zu der V-förmigen Einkerbung (55) der Klinge (5) zeigt, wobei die Stange (42) zwischen einer Einstellung mit minimaler Auslenkung, in der das Ende (42A) nicht mit der Batterie (2) interagiert, und einer Einstellung mit maximaler Auslenkung, bei deren Erreichen die Batterie (2) die zweite Referenzposition einnimmt, beweglich ist.

7. Schneidestation (1) gemäß einem der Ansprüche 1 bis 6, wobei die Station eine Ladevorrichtung zum automatischen Positionieren der Batterie (2) in der Aufnahme (61) der Positioniervorrichtung (60) aufweist.

8. Verfahren zur Trockentrennung von Komponenten von Batterien (2) zylindrischer Bauart, wobei das Verfahren
**dadurch gekennzeichnet ist, dass** es die Schritte aufweist:
a) Zerschneiden jeder der Batterien (2) in zwei Hälften (2A, 2B) entlang einer diametralen Fläche, die die Mittelachse (100) der Batterie (2) beinhaltet, wobei jede Batterie (2) mittels einer Klinge (5), deren Schneidekante (51) zumindest eine V-förmige Einkerbung (55) definiert, derart geschnitten wird, dass die Einkerbung (55) gegen eine transversale Fläche der Batterie (2) stößt;
b) mechanisches Abstreifen der Hälften (2A, 2B), die durch das Schneiden der Batterien (2) erhalten wurden, so dass die *schwarze Paste* von dem metallischen Teil und / oder dem Kunststoffanteil der Batterien (2) abgetrennt werden;
c) Trennen der gemäß Schritt b) erhaltenen Fragmente mittels Vibrationssieben in einen ersten Teil (F1) an Fragmenten, die eine Maximalgröße kleiner als ein erster vorbestimmter Wert aufweisen und in einen zweiten Teil (F2) an Fragmenten, die eine Maximalgröße größer als der erste vorbestimmte Wert aufweisen;
d) Trennen des zumindest ersten Teils (F1) mittels magnetischer Anziehung, um die Fragmente aus metallischem Material von der *schwarzen Paste* zu trennen.

9. Verfahren gemäß Anspruch 8, wobei das Verfahren weiter folgende Schritte aufweist:
e) Zerkleinern der Fragmente, die die zweite Fraktion (F2) bilden, um die gehärtete *schwarze Paste* zu zerlegen;
f) Trennen des in Schritt e) erzeugten zerkleinerten Produkts mittels Vibrationssieben, um es in eine weitere erste Fraktion (F1*) und eine weitere zweite Fraktion (F2*) zu trennen, die aus Fragmenten bestehen, deren Maximalgröße kleiner bzw. größer ist, als der erste vorbestimmte Wert;
g) Trennen des zumindest ersten weiteren Teils (F1*) mittels magnetischer Anziehung, um die Fragmente aus metallischem Material von der *schwarzen Paste* zu trennen;

10. Verfahren gemäß Anspruch 9, wobei in Schritt c) das Vibrationssieben durchgeführt wird, um eine dritte Fraktion (F3) von Fragmenten abzutrennen, so dass die Fragmente der zweiten Fraktion (F2) eine Maximalgröße aufweisen, die größer ist als der erste vorbestimmte Wert und kleiner ist als ein zweiter vorbestimmter Wert und die Fragmente der dritten Fraktion (F3) eine Maximalgröße aufweisen, die größer ist als der zweite vorbestimmte Wert, wobei das Verfahren die Schritte aufweist:
e1) Zerkleinern der Fragmente, die die zweite Fraktion (F2) bilden, um die gehärtete *schwarze Paste* zu zerlegen;
f1) Trennen des in Schritt e) erzeugten zerkleinerten Produkts mittels Vibrationssieben, um es in eine weitere erste Fraktion (F1*) und eine weitere zweite Fraktion (F2*) zu trennen, die aus Fragmenten bestehen, deren Maximalgröße kleiner bzw. größer ist, als ein vorbestimmter Wert, der entweder gleich
oder kleiner ist, als der erste vorbestimmte Wert;
g1) Trennen des zumindest weiteren ersten Teils (F1*) mittels magnetischer Anziehung, um die Fragmente des metallischen Materials von der *schwarzen Paste* zu trennen.

11. Verfahren gemäß Anspruch 10, wobei der erste vorbestimmte Wert etwa 1 mm und der zweite vorbestimmte Wert etwa 5 mm beträgt.

12. Verfahren gemäß Anspruch 10 oder 11, wobei das Verfahren die Schritte aufweist:
h) Trennen der dritten Fraktion (F3) mittels magnetischer Anziehung, um die metallischen Fragmente von einem gemischten Teil (PM) zu trennen, der aus Fragmenten aus Kunststoff und / oder *schwarzer Paste* besteht;
l) Zerkleinern des gemischten Teils (PM), um die *schwarze Paste* zu zerlegen;
m) Trennen des in Schritt I) erzeugten zerkleinerten Produkts mittels Vibrationssieben, um es in eine weitere erste Fraktion (F1-F3) und eine weitere zweite Fraktion (F2-3) zu trennen, die aus Fragmenten bestehen, deren Maximalgröße entsprechend kleiner bzw. größer ist, als ein vorbestimmter Wert, der entweder gleich oder kleiner ist als der erste vorbestimmte Wert;
n) Trennen der zumindest einen weiteren ersten Fraktion (F1-3) mittels magnetischer Anziehung, um die Fragmente aus metallischem Material von der *schwarzen Paste* zu trennen.

13. Verfahren gemäß einem der Ansprüche 8 bis 12, wobei die Batterien in Schritt a) mittels einer Schneidestation (1) gemäß einem der Ansprüche 1 bis 7 geschnitten werden.

14. Verfahren gemäß einem der Ansprüche 8 bis 13, wobei Schritt b) in einer Zerkleinerungsstation (110) durchgeführt wird, die ein Gehäuse aufweist, das durch eine Basis (111), eine seitlich begrenzende Struktur (112) und eine obere Verschlusswand (113) definiert wird, die eine Öffnung (114) zum Einlegen der geschnittenen Batterien (2) definiert, wobei das Zerkleinerungsstation einen zentralen Korpus (116) aufweist, der auf der Basis (111) drehbar ist, mit der die zumindest eine Kette (117) verbunden ist, wobei die Zerkleinerungsstation (110) eine Motorbaugruppe (11) aufweist, um den zentralen Korpus (116) und die mit ihm verbundene Kette (117) zu drehen.

15. System zur Durchführung des Verfahrens gemäß Anspruch 8, wobei das System zumindest aufweist:
- eine Schneidestation (1) gemäß einem der Ansprüche 1 bis 7;
- eine Zerkleinerungsstation (110) in die die Batterien (2), die in der Schneidestation (1) geschnitten werden, eingebracht werden, wobei die Station derart ausgestaltet ist, dass sie die geschnittenen Batterien so abstreift, dass die *schwarze Paste* von dem metallischen Teil und / oder von dem Kunststoffteil abgetrennt wird;
- eine Vibrationssieb-Station (120), in die die mittels der Zerkleinerungsstation (110) erhaltenen Fragmente verbracht werden, wobei die Vibrationssieb-Station (120) zumindest einen Vibrationssieb aufweist, um die erste Fraktion (F1) von Fragmenten mit einer Maximalgröße, die kleiner ist als ein erster vorbestimmter Wert, von der zweiten Fraktion (F2) von Fragmenten mit einer Maximalgröße, die größer ist als der erste vorbestimmte Wert, zu trennen;
- eine magnetische Trennstation (125), in die die erste Fraktion (F1) von Fragmenten verbracht wird, wobei die magnetische Trennstation (125) Mittel zur magnetischen Anziehung aufweist, die in aktiviertem Zustand die magnetischen Fragmente von der *schwarzen Paste* trennt.

## Revendications

1. Poste de coupe (1) pour couper une pile de type cylindrique, ladite pile (2) comprenant un corps qui s'étend autour d'un axe central (100) entre une première surface transversale et une seconde surface transversale, le poste de coupe (1) comprenant :
- une lame de coupe (5), qui identifie un plan de coupe (200) ;
- un dispositif de positionnement (60), qui définit un siège (61) pour ladite pile (2), de telle sorte que l'axe central (100) de ladite pile (2) soit essentiellement coplanaire avec ladite surface de coupe (200) ;
- des moyens de poussée et de déplacement (40), qui déterminent un mouvement relatif entre ladite lame de coupe (5) et ladite pile (2) le long d'une direction d'avance (400) parallèle audit plan de coupe (200), de telle sorte que, à la suite dudit mouvement relatif, ladite pile (2) soit coupée par ladite lame (5) en deux moitiés (2A, 2B),
**caractérisé en ce que**
ladite lame (5) comprend une arête (51) qui définit au moins une entaille en forme de V (55) qui fait face à l'une desdites surfaces transversales de ladite pile (2) lorsqu'elle est placée dans ledit siège (61), ladite pile (2) percutant au moins partiellement ladite entaille en forme de V (55) à la suite dudit mouvement relatif déterminé par lesdits moyens de poussée et de déplacement (40).

2. Poste de coupe (1) selon la revendication 1, dans lequel ladite arête (51) de ladite lame (5) définit une pluralité d'entailles en forme de V (55).

3. Poste de coupe (1) selon la revendication 1, dans lequel ladite entaille en forme de V (55) est définie par deux portions de coupe (55A, 55B), qui s'intersectent au niveau d'un sommet extrême intérieur (X) et dont chacune se termine au niveau d'un sommet extrême extérieur (Y), lesdites portions (55A, 55B) identifiant un angle d'ouverture (α) de ladite entaille (55) et une largeur (L) de ladite entaille (55) évaluée comme la distance entre les sommets extrêmes extérieurs (Y) desdites portions (55A, 55B), dans lequel ledit angle d'ouverture (α) est choisi dans une plage allant de 30° à 80° et dans lequel ladite largeur (L) est choisie dans une plage allant de 10 à 45 mm.

4. Poste de coupe (1) selon l'une quelconque des revendications 1 à 3, ledit poste de coupe (1) comprenant un dispositif de blocage (50) qui bloque ladite lame (5) dans une position fixe et dans lequel lesdits moyens de poussée et de déplacement (40) déplacent ladite pile (2) entre une première position de référence, dans laquelle ladite pile (2) est placée dans ledit siège (61) dudit dispositif de positionnement (60), et une seconde position de référence au niveau de laquelle ladite pile (2), parvenue à ladite position, est coupée en deux moitiés (2A, 2B) du fait de l'impact avec ladite lame (5).

5. Poste de coupe (1) selon la revendication 4, ledit poste de coupe (1) comprenant des moyens de guidage (70, 71, 72) pour guider le déplacement de ladite pile (2) le long de ladite direction d'avance (400) entre ladite première position de référence et ladite seconde position de référence (P2).

6. Poste de coupe (1) selon la revendication 4 ou 5, dans lequel lesdits moyens de poussée et de déplacement (40) comprennent un actionneur hydraulique (41) pourvu d'une tige (42) dont l'extrémité (42A) agit, soit directement, soit indirectement, sur une surface transversale de ladite pile (2) opposée à la surface transversale qui fait face à ladite entaille en forme de V (55) de ladite lame (5), ladite tige (42) étant déplaçable entre une configuration d'étendue minimale, dans laquelle ladite extrémité (42A) n'interagit pas avec ladite pile (2), et une configuration d'étendue maximale, dans laquelle, ladite tige ayant atteint ladite configuration, ladite pile (2) occupe ladite seconde position de référence.

7. Poste de coupe (1) selon l'une quelconque des revendications 1 à 6, ledit poste comprenant un dispositif de chargement (80) pour positionner de manière automatique ladite pile (2) dans ledit siège (61) dudit dispositif de positionnement (60).

8. Procédé pour la séparation à sec de composants de piles de type cylindrique (2), ledit procédé étant **caractérisé en ce qu'**il comprend les étapes suivantes :
a) couper chacune desdites piles (2) en deux moitiés (2A, 2B) le long d'un plan diamétral contenant l'axe central (100) de ladite pile (2), ladite pile (2) étant coupée au moyen d'une lame (5) dont l'arête (51) définit au moins une entaille en forme de V (55) et de telle sorte que ladite entaille (55) percute une surface transversale de ladite pile (2) ;
b) frapper mécaniquement les moitiés (2A, 2B) obtenues en coupant lesdites piles (2) de façon à détacher la *pâte noire* de la partie en métal et/ou de la partie en plastique desdites piles (2) ;
c) séparer, au moyen d'un tamisage par vibration, les fragments obtenus à la suite de l'étape b) en une première fraction (F1) de fragments présentant une taille maximale inférieure à une première valeur prédéterminée et une deuxième fraction (F2) de fragments présentant une taille maximale supérieure à ladite première valeur prédéterminée ;
d) séparer, par attraction magnétique, ladite au moins une première fraction (F1) de façon à séparer les fragments de matière métallique de ladite *pâte noire.*

9. Procédé selon la revendication 8, ledit procédé comprenant en outre les étapes suivantes :
e) broyer les fragments formant ladite deuxième fraction (F2) de façon à désagréger la *pâte noire* durcie ;
f) séparer, au moyen d'un tamisage par vibration, le produit broyé généré au cours de l'étape e) de tamisage par vibration de façon à le séparer en une autre première fraction (F1*) et une autre deuxième fraction (F2*) composées de fragments, dont la taille maximale est respectivement inférieure et supérieure à une valeur prédéterminée, soit équivalente, soit inférieure à ladite première valeur prédéterminée ;
g) séparer, par attraction magnétique, ladite au moins une autre première fraction (F1*) de façon à détacher les fragments de matière métallique de ladite *pâte noire.*

10. Procédé selon la revendication 9, dans lequel, dans ladite étape c), ledit tamisage par vibration est réalisé de façon à séparer une troisième fraction (F3) de fragments de telle sorte que les fragments de ladite deuxième fraction (F2) aient une taille maximale qui est supérieure à ladite première valeur prédéterminée et inférieure à une seconde valeur prédéterminée, et les fragments de ladite fraction (F3) aient une taille maximale supérieure à ladite seconde valeur prédéterminée et ledit procédé comprenant les étapes suivantes :
e1) broyer les fragments formant ladite deuxième fraction (F2) de façon à obtenir la désagrégation de ladite *pâte noire ;*
f1) séparer, au moyen d'un tamisage par vibration, le produit broyé généré au cours de l'étape e) de tamisage par vibration de façon à le séparer en une autre première fraction (F1*) et une autre deuxième fraction (F2*) comprenant des fragments, dont la taille maximale est respectivement inférieure et supérieure à une valeur prédéterminée, soit équivalente, soit inférieure à ladite première valeur prédéterminée ;
g1) séparer, par attraction magnétique, ladite au moins une autre première fraction (F1*) de façon à détacher les fragments de matière métallique de ladite *pâte noire.*

11. Procédé selon la revendication 10, dans lequel ladite première valeur prédéterminée est d'environ 1 mm et dans lequel ladite seconde valeur prédéterminée est d'environ 5 mm.

12. Procédé selon la revendication 10 ou 11, ledit procédé comprenant les étapes suivantes :
h) séparer, par attraction magnétique, ladite troisième fraction (F3) de façon à séparer les fragments de métal d'une partie mixte (PM) composée de fragments de matière plastique et/ou de *pâte noire ;*
l) broyer ladite partie mixte (PM) de façon à obtenir la désagrégation de ladite *pâte noire ;*
m) séparer, au moyen d'un tamisage par vibration, le produit broyé généré au cours de l'étape 1) de tamisage par vibration de façon à le séparer en une autre première fraction (F1-3) et une autre deuxième fraction (F2-3) composées de fragments dont la taille maximale est respectivement inférieure et supérieure à une valeur prédéterminée, soit équivalente, soit inférieure à ladite première valeur prédéterminée ;
n) séparer, par attraction magnétique, ladite au moins une autre première fraction (F1-3) de façon à détacher les fragments de matière métallique de ladite *pâte noire.*

13. Procédé selon l'une quelconque des revendications 8 à 12, dans lequel, dans ladite étape a), lesdites piles sont coupées au moyen d'un poste de coupe (1) selon l'une quelconque des revendications 1 à 7.

14. Procédé selon l'une quelconque des revendications 8 à 13, dans lequel ladite étape b) est réalisée dans un poste de désagrégation (110), qui comprend une enveloppe définie par une base (111), une structure de délimitation latérale (112) et une paroi de fermeture supérieure (113) définissant une ouverture (114) pour insérer lesdites piles (2) coupées, ledit poste de désagrégation comprenant un corps central (116) pivotant sur ladite base (111) auquel est reliée au moins une chaîne (117), ledit poste de désagrégation (110) comprenant un ensemble formant moteur (11) pour tourner ledit corps central (116) et ladite chaîne (117) reliée à celui-ci.

15. Système pour mettre en œuvre le procédé selon la revendication 8, ledit système comprenant au moins :
- un poste de coupe (1) selon l'une quelconque des revendications 1 à 7 ;
- un poste de désagrégation (110), dans lequel sont introduites lesdites piles (2) coupées dans ledit poste de coupe (1), ledit poste étant configuré pour frapper lesdites piles coupées de façon à détacher la *pâte noire* de la partie en métal et/ou de la partie en plastique ;
- un poste de tamisage par vibration (120), dans lequel sont chargés les fragments obtenus au moyen dudit poste de désagrégation (110), ledit poste de tamisage par vibration (120) comprenant au moins un tamis vibrant pour séparer ladite première fraction (F1) de fragments présentant une taille maximale inférieure à une première valeur prédéterminée, de ladite deuxième fraction (F2) de fragments, présentant une taille maximale supérieure à ladite première valeur prédéterminée ;
- un poste de séparation magnétique (125), dans lequel est chargée ladite première fraction (F1) de fragments, ledit poste de séparation magnétique (125) comprenant des moyens d'attraction magnétique qui, dans un état d'activation, séparent les fragments magnétiques de la *pâte noire.*
